Europäisches Patentamt

European Patent Office

Office européen des brevets

(11) Numéro de publication: **0 301 632 B1**

(12) **FASCICULE DE BREVET EUROPEEN**

(45) Date de publication de fascicule du brevet: **04.03.92**  (51) Int. Cl.⁵: **C08L 27/06**, //(C08L27/06, 67:04)

(21) Numéro de dépôt: **88201478.0**

(22) Date de dépôt: **12.07.88**

(54) Compositions souples à base de polymères du chlorure de vinyle comprenant de la poly Epsilon-caprolactone.

(30) Priorité: **24.07.87 FR 8710613**

(43) Date de publication de la demande:
**01.02.89 Bulletin 89/05**

(45) Mention de la délivrance du brevet:
**04.03.92 Bulletin 92/10**

(84) Etats contractants désignés:
**AT BE CH DE ES GB GR IT LI LU NL SE**

(56) Documents cités:
**DE-A- 1 569 473**

(73) Titulaire: **SOLVAY**
**Rue du Prince Albert, 33**
**B-1050 Bruxelles(BE)**

(72) Inventeur: **Malfroid, Pierre**
**Avenue Félix Lacourt, 163**
**B-5980 Grez-Doiceau(BE)**
Inventeur: **Nguyen, Oui Long**
**Ouai de L'Ourthe, 43/34**
**B-4020 Liège(BE)**
Inventeur: **Blondin, Jean-Marie**
**Rue de Hellènes, 47**
**B-1050 Bruxelles(BE)**
Inventeur: **Burnay, Jean-Paul**
**Rue de Lombardsijde, 188**
**B-1120 Bruxelles(BE)**

(74) Mandataire: **Marckx, Frieda**
**Solvay Département de la Propriété Indus-**
**trielle 310, rue de Ransbeek**
**B-1120 Bruxelles(BE)**

EP 0 301 632 B1

## Description

La présente invention concerne des compositions souples à base de polymères du chlorure de vinyle comprenant de la poly-ε-caprolactone. Elle concerne plus particulièrement de telles compositions dont la dureté Shore A initiale est égale à 85 au maximum.

Les compositions souples, c'est-à-dire plastifiées, à base de polychlorure de vinyle trouvent des applications multiples dans des domaines aussi divers que le domaine médical, le domaine de l'automobile et l'industrie du bâtiment. Pour bon nombre de ces applications, on a recours à des plastifiants non migrants et en particulier à des plastifiants polymériques tels que par exemple, la poly-ε-caprolactone. Néanmoins, il est connu que la poly-ε-caprolactone a tendance à cristalliser au sein du polychlorure de vinyle et que cette tendance s'accentue avec la concentration en poly-ε-caprolactone du mélange. Cette cristallisation a pour conséquence une perte de souplesse dans le temps et de transparence des objets façonnés à l'intervention de mélanges de polychlorure de vinyle et de poly-ε-caprolactone. On a vérifié qu'au-delà d'une concentration de 35 % en poids environ de poly-ε-caprolactone dans de tels mélanges - dont la dureté Shore A initiale se situe aux environs de 86 - il n'est plus possible d'obtenir une souplesse stable. Par souplesse stable, on entend une variation inférieure à 5 de la dureté Shore A après deux mois de stockage à température ambiante. L'utilisation de compositions souples à base de polychlorure de vinyle et de poly-ε-caprolactone est donc limitée, en pratique, aux domaines où une souplesse maximale correspondant à une dureté Shore A initiale de 86 environ suffit.

La présente invention a pour but de procurer des compositions à base de polymères du chlorure de vinyle et de poly-ε-caprolactone qui ne présentent pas les inconvénients précités. A cet effet, l'invention telle que caractérisée dans les revendications, procure des compositions dont la dureté Shore A initiale est égale à 85 au maximum et dont la souplesse est stable.

Un effet surprenant de la présente invention réside dans le fait que le recours à des copolymères du chlorure de vinyle et d'acrylates d'alkyles permet d'atteindre des niveaux de souplesse élevés et stables dans le temps qu'il est impossible d'atteindre avec les compositions de l'art antérieur à base de polychlorure de vinyle et de poly-ε-caprolactone.

Par copolymères du chlorure de vinyle et d'acrylates d'alkyles, on entend désigner les copolymères comprenant au maximum 50 % en poids d'unités monomériques dérivées d'acrylates d'alkyles dont les radicaux alkyles, à chaînes linéaires ou ramifiées, contiennent de 1 à 10 atomes de carbone.

On donne la préférence aux copolymères du chlorure de vinyle contenant de 5 à 45 % en poids d'unités monomériques dérivées d'acrylates d'alkyles et plus particulièrement encore à ceux contenant de 15 à 35 % en poids de telles unités monomériques. Il est entendu que le copolymère peut contenir un ou plusieurs acrylates d'alkyles. Il est également entendu que le copolymère peut contenir de faibles quantités, jusqu'à 5 % en poids environ, d'un autre monomère vinylique choisi, de préférence, parmi les monomères vinyliques moins réactifs que le chlorure de vinyle. A titre d'exemples de pareils copolymères, on peut citer les copolymères du chlorure de vinyle et d'acrylates d'alkyles contenant jusqu'à 5 % en poids d'acétate de vinyle. On donne néanmoins la préférence aux copolymères binaires du chlorure de vinyle et d'un acrylate d'alkyle.

Pour ce qui concerne les acrylates d'alkyles, on donne la préférence aux acrylates d'alkyles dont les radicaux alkyles, à chaînes linéaires ou ramifiées, contiennent de 3 à 9 atomes de carbone et plus particulièrement encore de 4 à 8 atomes de carbone. Un acrylate d'alkyle tout particulièrement préféré est l'acrylate de 2-éthylhexyle.

Les copolymères du chlorure de vinyle et d'acrylates d'alkyles peuvent être obtenus par toutes les techniques usuelles de polymérisation et, en particulier, par celles où les monomères sont dispersés à l'aide d'agents dispersants ou émulsionnants dans un milieu aqueux de polymérisation. On donne néanmoins la préférence aux copolymères obtenus par polymérisation en suspension aqueuse. On donne par ailleurs la préférence aux copolymères homogènes obtenus par une injection différée des acrylates d'alkyles, plus réactifs que le chlorure de vinyle.

Par conséquent, des polymères du chlorure de vinyle particulièrement préférés pour la réalisation des compositions souples selon l'invention sont les copolymères binaires homogènes du chlorure de vinyle et d'un acrylate d'alkyle dont les radicaux alkyles, à chaînes linéaires ou ramifiées, contiennent de 4 à 8 atomes de carbones. Des copolymères tout particulièrement préférés sont les copolymères binaires homogènes du chlorure de vinyle et de l'acrylate de 2-éthylhexyle.

La souplesse des compositions selon l'invention dépend, d'une part, de la nature du copolymère (et varie en fonction de sa teneur en acrylate d'alkyle et de la nature de ce dernier) et, d'autre part, de la teneur en poly-ε-caprolactone.

La concentration minimale en poly-ε-caprolactone des compositions selon l'invention, c'est-à-dire celle

2

conférant aux compositions une souplesse qui corresponde à une dureté Shore A initiale de 85 (souplesse minimale) peut être déterminée aisément par voie expérimentale pour chaque copolymère donné du chlorure de vinyle. Les compositions selon l'invention présentant une dureté Shore A initiale de 85 présentent toutes une souplesse stable telle que définie plus haut.

La concentration molaire maximale en poly-$\epsilon$-caprolactone des compositions selon l'invention assurant une souplesse maximale et toujours stable est par ailleurs définie par la formule suivant :

$$\ln x_{PCL} = -1,48 - \frac{163 + 160\,(n-1)}{86 + 14\,(n-1)} \cdot x_{ACR}$$

dans laquelle :

$x_{PCL}$  représente la fraction molaire maximale en unités monomériques de la poly-$\epsilon$-caprolactone (PCL) dans le mélange PCL plus copolymère du chlorure de vinyle,

$x_{ACR}$  représente la fraction molaire d'acrylate d'alkyle dans le copolymère du chlorure de vinyle et

$n$  représente le nombre d'atomes de carbone du radical alkyle de l'acrylate d'alkyle.

Il est entendu que les compositions selon l'invention peuvent contenir tous les ingrédients usuels utilisés à la mise en oeuvre de compositions souples à base de polymères du chlorure de vinyle, tels que des lubrifiants, des agent facilitant la mise en oeuvre, des matières de charges, des pigments ou encore des caoutchoucs, tels que par exemple des caoutchoucs nitriles destinés à améliorer la souplesse des compositions aux très basses températures et de diminuer leur rémanence.

Le mélange de la poly-$\epsilon$-caprolactone et du copolymère du chlorure de vinyle ne pose aucun problème particulier. Ceux-ci peuvent être mélangés, par exemple, au moment de la fabrication du prémélange. On peut également copolymériser le chlorure de vinyle et l'acrylate d'alkyle et, le cas échéant, l'autre monomère vinylique en présence de poly-$\epsilon$-caprolactone préformée et y incorporer ensuite les ingrédients usuels du prémélange.

Les compositions selon l'invention présentent l'avantage de gélifier plus aisément que les compositions connues à base de polychlorure de vinyle et de poly-$\epsilon$-caprolactone. Elles sont par ailleurs beaucoup plus souples à même teneur en poly-$\epsilon$-caprolactoneet permettent d'atteindre des niveaux de souplesse stable très élevés qui'il n'est pas possible d'atteindre avec les compositions connues.

Les compositions selon l'invention peuvent être mises en oeuvre par toutes les techniques usuelles de mise en oeuvre de compositions souples à base de polymères du chlorure de vinyle telles que, par exemple, l'injection, le calandrage ou l'extrusion. Elles conviennent pour la réalisation d'objets souples utilisables dans des domaines aussi divers que le domaine médical (poches à sang et à liquides physiologiques), le domaine de l'automobile (profilés et joints divers) ou encore l'industrie du bâtiment (feuilles d'étanchéité).

Les exemples qui suivent illustrent l'invention. Les exemples 1 à 6, selon l'invention, concernent des compositions à base de copolymères binaires homogènes du chlorure de vinyle et d'acrylates de méthyle (exemple 1), de n-butyle (exemples 2 et 3) et de 2-éthylhexyle (exemples 4, 5 et 6). L'exemple 7, selon l'invention, concerne une composition à base d'un copolymère du chlorure de vinyle et d'acrylate de 2-éthylhexyle contenant 2,5 % en poids d'acétate de vinyle. Dans les exemples 1 à 5, on a utilisé la quantité maximale de poly-$\epsilon$-caprolactone conduisant à une souplesse maximale stable dans le temps.

Les exemples 8, 9 et 10, de comparaison, concernent des compositions à base de polychlorure de vinyle et de poly-$\epsilon$-caprolactone contenant des quantités variables de poly-$\epsilon$-caprolactone.

Dans tous les exemples la poly-$\epsilon$-caprolactone utilisée est une poly-$\epsilon$-caprolactone en granules essentiellement linéaire, d'un poids moléculaire approximatif de 50.000, produite et commercialisée par INTEROX sous la marque CAPA (qualité 650).

Les indices de viscosité (I.V.) des copolymères homogènes du chlorure de vinyle et d'acrylates d'alkyles utilisés dans les exemples 1 à 7, mesurés selon la norme ISO 174-1961, figurent au Tableau I en annexe.

L'indice de viscosité du polychlorure de vinyle utilisé dans les exemples de comparaison 8 à 10 s'élève à 82,4.

Dans les exemples 1 à 10, on a préparé des crêpes par malaxage à 160 °C pendant 4 minutes de 143 g d'un mélange de polymère du chlorure de vinyle et de poly-$\epsilon$-caprolactone, de 3 g de stabilisant thermique (dioctyle dithioglycolate d'étain), de 1,5 g d'agent facilitant la mise en oeuvre (terpolymère de méthacrylate de méthyle/styrène/acrylonitrile) et de 0,2 g de lubrifiant (cire de polyéthylène).

3

A partir des crêpes ainsi obtenus, on a pressé des plaques par préchauffage des crêpes à 165°C pendant 2 min. 30 sec., suivi d'un pressage à 165°C pendant 1 minute sous une pression de 6.865 kPa.

La dureté Shore A a été mesurée sur ces plaques suivant la Norme Française NF T 51-109 (température 23°C ± 2 ; humidité relative 50 ± 5%).

Des normes équivalentes pouvant également être utilisées pour évaluer la dureté Shore A sont les normes ASTM D 2240 ; DIN 53 505 et ISO 868.

Dans le Tableau I annexé sont consignées la composition pondérale et molaire des mélanges de copolymère du chlorure de vinyle (VC)/poly-$\epsilon$-caprolactone, la teneur pondérale et molaire des copolymères en acrylate d'alkyle et enfin la dureté Shore A initiale et celle mesurée après deux mois de stockage à température ambiante des compositions selon les exemples 1 à 7.

Dans le Tableau II en annexe sont consignées les proportions pondérales de polychlorure de vinyle et de poly-$\epsilon$-caprolactone, ainsi que la dureté Shore A initiale et celle mesurée après deux mois de stockage à température ambiante des compositions selon les exemples de comparaison 8 à 10.

Tableau I

| N° de l'exemple | Composition du copolymère du chlorure de vinyle (VC) | | | | Composition du mélange | | | | Dureté Shore A à 23°C | |
|---|---|---|---|---|---|---|---|---|---|---|
| | Nature de l'acrylate | Teneur en acrylate | | I.V. | Copo. du VC | | Poly-ε-caprolact. | | initiale | après 2 mois |
| | | % poids | % moles | | % poids | % moles | % poids | % moles | | |
| 1 | acrylate de méthyle | 30 | 23,7 | 162 | 78 | 85,6 | 22 | 14,4 | 82 | 84 |
| 2 | acrylate de n-butyle | 25 | 14 | 148 | 82 | 87,9 | 18 | 12,1 | 72 | 74 |
| 3 | acrylate de n-butyle | 30 | 17,3 | 164 | 86 | 90,5 | 14 | 9,5 | 68 | 72 |
| 4 | acrylate de 2-éthylhexyle | 18 | 7 | 125 | 80 | 86,5 | 20 | 13,5 | 80 | 84 |
| 5 | acrylate de 2-éthylhexyle | 30 | 12,7 | 153 | 87 | 90,7 | 13 | 9,3 | 65 | 67 |
| 6 | acrylate de 2-éthylhexyle | 30 | 12,7 | 153 | 92 | 94,4 | 8 | 5,6 | 80 | 81 |
| 7 | acrylate de 2-éthylhexyle | 27,5 | 11,5 | 130 | 87 | 90,8 | 13 | 9,2 | 69 | 71 |

Tableau II

| No. de l'exemple | Composition du mélange, % en poids | | Dureté Shore A | |
|---|---|---|---|---|
| | Polychlorure de vinyle | Poly-ε-caprolactone | initiale | après 2 mois |
| 8 | 64 | 36 | 82 | 87 |
| 9 | 63 | 37 | 81 | 88 |
| 10 | 62 | 38 | 79 | 90 |

**Revendications**

1. Compositions souples à base de polymères du chlorure de vinyle et de poly-ε-caprolactone, caractérisées en ce que les polymères du chlorure de vinyle sont choisis parmi les copolymères du chlorure de vinyle et d'acrylates d'alkyles comprenant au maximum 50 % en poids d'unités monomériques dérivées d'acrylates d'alkyles dont les radicaux alkyles à chaînes linéaires ou ramifiées contiennent de 1 à 10 atomes de carbone et en ce que la dureté Shore A initiale des compositions est égale à 85 au maximum.

2. Compositions souples à base de polymères du chlorure de vinyle et de poly-ε-caprolactone selon la revendication 1, caractérisées en ce que les copolymères du chlorure de vinyle contiennent de 5 à 45 % en poids d'unités monomériques dérivées d'acrylates d'alkyles.

3. Compositions souples à base de polymères du chlorure de vinyle et de poly-ε-caprolactone selon la revendication 2, caractérisées en ce que les copolymères du chlorure de vinyle contiennent de 15 à 35 % en poids d'unités monomériques dérivées d'acrylates d'alkyles.

4. Compositions souples à base de polymères du chlorure de vinyle et de poly-ε-caprolactone selon l'une quelconque des revendications 1 à 3, caractérisées en ce que les copolymères du chlorure de vinyle contiennent jusqu'à 5 % en poids d'acétate de vinyle.

5. Compositions souples à base de polymères du chlorure de vinyle et de poly-ε-caprolactone selon l'une quelconque des revendications 1 à 4, caractérisées en ce que les radicaux alkyles des acrylates d'alkyles contiennent de 3 à 9 atomes de carbone.

6. Compositions souples à base de polymères du chlorure de vinyle et de poly-ε-caprolactone selon la revendication 5, caractérisées en ce que les radicaux alkyles des acrylates d'alkyles contiennent de 4 à 8 atomes de carbone.

7. Compositions souples à base de polymères du chlorure de vinyle et de poly-ε-caprolactone selon l'une quelconque des revendications 1 à 6, caractérisées en ce que les polymères du chlorure de vinyle sont des copolymères binaires homogènes du chlorure de vinyle et d'acrylates d'alkyles dont les radicaux alkyles contiennent de 4 à 8 atomes de carbone.

8. Compositions souples à base de polymères du chlorure de vinyle et de poly-ε-caprolactone selon la revendication 1, caractérisées en ce que la concentration molaire maximale en poly-ε-caprolactone des compositions est définie par la formule suivante :

$$\ln x_{PCL} = -1,48 - \frac{163 + 160\,(n-1)}{86 + 14\,(n-1)} \cdot x_{ACR}$$

dans laquelle :

6

$x_{PCL}$ représente la fraction molaire maximale en unités monomériques de la poly-$\epsilon$-caprolactone (PCL) dans le mélange PCL plus copolymère du chlorure de vinyle,

$x_{ACR}$ représente la fraction molaire d'acrylate d'alkyle dans le copolymère du chlorure de vinyle et

n représente le nombre d'atomes de carbone du radical alkyle de l'acrylate d'alkyle.

**Claims**

1. Flexible compositions based on vinyl chloride polymers and on poly-$\epsilon$-caprolactone, characterised in that the vinyl chloride polymers are chosen from the copolymers of vinyl chloride and of alkyl acrylates, containing not more than 50% by weight of monomer units derived from alkyl acrylates in which the alkyl radicals consisting of linear or branched chains contain from 1 to 10 carbon atoms and in that the initial Shore A hardness of the compositions does not exceed 85.

2. Flexible compositions based on vinyl chloride polymers and on poly-$\epsilon$-caprolactone according to Claim 1, characterised in that the vinyl chloride copolymers contain from 5 to 45% by weight of monomer units derived from alkyl acrylates.

3. Flexible compositions based on vinyl chloride polymers and on poly-$\epsilon$-caprolactone according to Claim 2, characterised in that the vinyl chloride copolymers contain from 15 to 35% by weight of monomer units derived from alkyl acrylates.

4. Flexible compositions based on vinyl chloride polymers and on poly-$\epsilon$-caprolactone according to any one of Claims 1 to 3, characterised in that the vinyl chloride copolymers contain up to 5% by weight of vinyl acetate.

5. Flexible compositions based on vinyl chloride polymers and on poly-$\epsilon$-caprolactone according to any one of Claims 1 to 4, characterised in that the alkyl radicals of the alkyl acrylates contain from 3 to 9 carbon atoms.

6. Flexible compositions based on vinyl chloride polymers and on poly-$\epsilon$-caprolactone according to Claim 5, characterised in that the alkyl radicals of the alkyl acrylates contain from 4 to 8 carbon atoms.

7. Flexible compositions based on vinyl chloride polymers and on poly-$\epsilon$-caprolactone according to any one of Claims 1 to 6, characterised in that the vinyl chloride polymers are homogeneous binary copolymers of vinyl chloride and of alkyl acrylates in which the alkyl radicals contain from 4 to 8 carbon atoms.

8. Flexible compositions based on vinyl chloride polymers and on poly-$\epsilon$-caprolactone according to Claim 1, characterised in that the maximum molar concentration of poly-$\epsilon$-caprolactone in the compositions is defined by the following formula:

$$\ln x_{PCL} = -1,48 - \frac{163 + 160\,(n-1)}{86 + 14\,(n-1)} \cdot x_{ACR}$$

in which:

$x_{PCL}$ denotes the maximum molar fraction, in monomer units of poly-$\epsilon$-caprolactone (PCL), in the mixture of PCL plus vinyl chloride copolymer,

$x_{ACR}$ denotes the molar fraction of alkyl acrylate in the vinyl chloride copolymer, and

n denotes the number of carbon atoms in the alkyl radical of the alkyl acrylate.

**Patentansprüche**

1. Weiche Zusammensetzungen auf der Basis von Vinylchlorid-Polymeren und Poly-$\epsilon$-caprolacton, da-

7

durch gekennzeichnet, daß die Vinylchlorid-Polymeren ausgewählt sind unter den Vinylchlorid- und Alkylacrylat-Copolymeren, die höchstens 50 Gew.-% monomere, von Alkylacrylaten abgeleitete Einheiten umfassen, deren Alkylreste in linearen oder verzweigten Ketten 1 bis 10 Kohlenstoffatome enthalten und, daß die Anfangs-Shorehärte A der Zusammensetzungen gleich höchstens 85 ist.

2. Weiche Zusammensetzungen auf der Basis von Vinylchlorid-Polymeren und Poly-ε-caprolacton nach Anspruch 1, dadurch gekennzeichnet, daß die Vinylchlorid-Copolymeren 5 bis 45 Gew.-% monomere Einheiten, abgeleitet von Alkylacrylaten, enthalten.

3. Weiche Zusammensetzungen auf der Basis von VinylchloridPolymeren und Poly-ε-caprolacton nach Anspruch 2, dadurch gekennzeichnet, daß die Vinylchlorid-Copolymeren 15 bis 35 Gew.-% monomere Einheiten, abgeleitet von Alkylacrylaten, enthalten.

4. Weiche Zusammensetzungen auf der Basis von Vinylchlorid-Polymeren und Poly-ε-caprolacton nach einem der Ansprüche 1 bis 3, dadurch gekennzeichnet, daß die Vinylchlorid-Copolymeren bis zu 5 Gew.-% Vinylacetat enthalten.

5. Weiche Zusammensetzungen auf der Basis von Vinylchlorid-Polymeren und Poly-ε-caprolacton nach einem der Ansprüche 1 bis 4, dadurch gekennzeichnet, daß die Alkylreste der Alkylacrylate 3 bis 9 Kohlenstoffatome enthalten.

6. Weiche Zusammensetzungen auf der Basis von Vinylchlorid-Polymeren und Poly-ε-caprolacton nach Anspruch 5, dadurch gekennzeichnet, daß die Alkylreste der Alkylacrylate 4 bis 8 Kohlenstoffatome enthalten.

7. Weiche Zusammensetzungen auf der Basis von Vinylchlorid-Polymeren und Poly-ε-caprolacton nach einem der Ansprüche 1 bis 6, dadurch gekennzeichnet, daß die Vinylchlorid-Polymeren binäre, homogene Copolymere von Vinylchlorid und von Alkylacrylaten sind, deren Alkylreste 4 bis 8 Kohlenstoffatome enthalten.

8. Weiche Zusammensetzungen auf der Basis von Vinylchlorid-Polymeren und Poly-ε-caprolacton nach Anspruch 1, dadurch gekennzeichnet, daß die maximale molare Konzentration an Poly-ε-caprolacton der Zusammensetzungen durch die folgende Formel definiert ist:

$$\ln x_{PCL} = -1,48 - \frac{163 + 160\,(n-1)}{86 + 14\,(n-1)} \cdot x_{ACR}$$

worin:

$x_{PCL}$ den maximalen, molaren Anteil in monomeren Einheiten des Poly-ε-caprolactons (PCL) in der Mischung PCL plus Vinylchlorid-Copolymer darstellt,

$x_{ACR}$ den molaren Anteil von Alkylacrylat in dem Vinylchlorid-Copolymer darstellt und

n die Anzahl an Kohlenstoffatomen des Alkylrestes des Alkylacrylats darstellt.